# EUROPÄISCHE PATENTSCHRIFT

(11) **EP 2 251 178 B1**
(45) Veröffentlichungstag und Bekanntmachung des Hinweises auf die Patenterteilung: **04.06.2014**
(21) Anmeldenummer: 10004842.0
(22) Anmeldetag: 11.08.2005
(51) Int. Cl.: B29C 47/08, B29C 47/66

(54) **Einrichtung zum Wechseln eines Extrusionszylinders eines Extruders**
Device for exchanging the cylinder of an extruder
Dispositif pour échanger le cylindre à vis d'une extrudeuse

(30) Priorität: 19.08.2004 DE 102004040186
(43) Veröffentlichungstag der Anmeldung: 17.11.2010
(62) Teilanmeldung aus: 05017472.1
(73) Patentinhaber: Leistritz Extrusionstechnik GmbH, 90459 Nürnberg (DE)
(72) Erfinder: Steiner, Richard, 90574 Roßtal (DE)
(74) Vertreter: Blaumeier, Jörg

(56) Entgegenhaltungen:
- DE-U1- 29 506 094
- JP-A- 58 102 737
- JP-A- 58 187 323
- JP-A- 2001 150 509
- US-A- 4 778 370
- US-A- 5 498 380

## Beschreibung

Die Erfindung betrifft eine Einrichtung zum Wechseln eines Extrusionszylinders eines Extruders, welcher Extrusionszylinder aus mehreren Zylinderabschnitten und wenigstens einem im Zylinderinneren befindlichen Schneckenelement, das zum Extrudieren mit einem Antriebsaggregat des Extruders zu koppeln ist, besteht, gemäß dem Oberbegriff des Anspruchs 1, und JP 2001 150509A.

Extruder kommen zur Aufbereitung und Verarbeitung unterschiedlichster Stoffe zum Einsatz, beispielsweise bei der Farbmasterbatch-Herstellung oder Compounding-Prozessen sowie der Verarbeitung von thermoplastischen Werkstoffen. Dabei spielen in annähernd allen Bereichen auch kleinere Batchgrößen, beispielsweise im Bereich von 25 - 1000 kg, zunehmend eine Rolle. Mit einem Produktwechsel wäre im Hinblick auf einen optimalen Arbeitsprozess und ein optimales Arbeitsergebnis ein Umbau des Extrusionszylinders samt des oder der in ihm befindlichen Schneckenelemente erforderlich, verbunden mit einer intensiven Reinigung derjenigen Zylinderteile bzw. Schneckenteile, die auch im Rahmen der Verarbeitung der neuen Materialien eingesetzt werden können. Ein Umbau erfordert ein vollständiges Zerlegen des aus segmentierten Zylinderabschnitten und Schneckenabschnitten bestehenden Extrusionszylinders, was sehr lange dauert, in der Regel 1 - 2 Tage. Hiermit ist also ein langer Stillstand des Extruders verbunden, was sehr unwirtschaftlich ist. Im Hinblick darauf wird in der Regel ein Kompromiss dahingehend eingegangen, dass ein Extrusionszylinder- und Schneckenaufbau gewählt wird, der hinsichtlich der Verarbeitung und der erhaltenen Produktqualität einen tragfähigen Kompromiss darstellt, mithin also ein Zerlegen nicht mehr erforderlich ist, sondern lediglich eine sehr intensive Reinigung. Gleichwohl sind auch in diesem Fall Stillstandszeiten von 6 - 12 Stunden üblich, verbunden mit möglichen Minderungen hinsichtlich der Produktqualität und des Durchsatzes, nachdem ein bezogen auf das jeweilige Produkt optimal ausgelegter Extrusionszylinder in diesem Fall gerade nicht verwendet wird.

Der Erfindung liegt das Problem zugrunde, eine Möglichkeit anzugeben, die ein wesentlich schnelleres Umrüsten eines Extruders ermöglicht.

Erfindungsgemäß wird zur Lösung dieses Problems eine Schnellwechseleinrichtung für einen Extrusionszylinder angegeben gemäß dem kennzeichnenden Teil des Anspruchs 1.

Die erfindungsgemäße Schnellwechseleinrichtung umfasst einen rahmen- oder gestellartigen Träger, auf dem der komplette Extrusionszylinder samt der in ihm befindlichen Schneckenelement sowie bevorzugt auch der gesamten Wasserversorgung, Stromversorgung und den Steuerleitungen aufgebaut ist. Das heißt, an diesem standardisierten Träger, der für unterschiedliche auf ihm aufgebaute Zylinder stets gleich ist, ist die komplette Verfahrenseinheit einschließlich aller Versorgungs- und Steuerleitungen vorgesehen. Dieser Träger ist nun erfindungsgemäß mit einem extruderseitigen Aufnahmemittel sowie mit einem bezüglich des Extruders verfahrbaren Transportmittel lösbar verbindbar, wobei er zwischen beiden übergeben werden kann. Hierzu ist ein Bewegungsmechanismus am Aufnahmemittel und/oder am Transportmittel vorgesehen, der diese Übergabe oder den Wechsel der gesamten Verfahrenseinheit ermöglicht.

Bei einem Produktwechsel kann nun nach Lösen der in ihrer Anzahl möglichst gering zu haltenden, bevorzugt zu bündelnden Versorgungs- und Steuerleitungen von der zentralen, extruderseitig vorgesehenen Versorgungs- und Steuereinrichtung und nach Entkoppeln des oder der Schneckenelemente vom Extruderantrieb der gesamte Extrusionszylinder vom Aufnahmemittel auf das bereitgestellte Transportmittel übergeben werden. Anschließend wird ein bereits vorher aufgebauter, optimal auf das nunmehr herzustellende Produkt ausgelegter Extrusionszylinder über ein Transportmittel bereitgestellt und von diesem an das Aufnahmemittel übergeben, wobei auch hier der Träger die Wechselplattform darstellt. Nach der Übergabe des neuen Extrusionszylinders auf das Aufnahmemittel muss der Extrusionszylinder lediglich noch angekoppelt werden, das heißt die entsprechende Versorgungsleitungen sind mit den zentralen Zuführeinrichtungen bzw. Steuereinrichtungen zu verbinden, wie auch die Schneckenelemente mit dem Antrieb zu koppeln sind.

Ersichtlich kann durch den Wechsel des kompletten Extrusionszylinders und die Möglichkeit, den neuen Extrusionszylinder bereits vorher auf einen standardisierten Wechselträger aufzubauen, ein sehr schneller Wechsel der Verfahrenseinheit erfolgen, so dass Umrüstzeiten im Bereich von 30 Minuten und weniger möglich sind. Das heißt, die Stillstandszeit des Extruders wird eklatant reduziert, verglichen mit bisher üblichen Praktiken im Rahmen eines Produktwechsels, was insbesondere aus Wirtschaftlichkeitsaspekten besonders vorteilhaft ist. Die Möglichkeit des vorherigen Aufbaus des neuen Extrusionszylinders auf dem Standard-Wechselträger ermöglicht mit besonderem Vorteil auch, den Extrusionszylinder vor seinem Anbau bereits vorzuheizen, so dass die Zeit, bis mit der eigentlichen Produktion des neuen Produkts begonnen werden kann, noch weiter reduziert werden kann, da der Extruder nach dem Ankoppeln des neuen Extrusionszylinders unmittelbar betriebsbereit ist.

Wie beschrieben erfolgt der Wechsel vom Aufnahmemittel zum Transportmittel und umgekehrt über einen Bewegungsmechanismus, der geeignet ist, die je nach Auslegung sehr schwere Verfahrenseinheit sicher vom einen Teil auf das andere zu übergeben. Dabei kann in einer ersten Erfindungsalternative das Aufnahmemittel selbst für eine Bewegung des Extrusionszylinders senkrecht zu dessen Längsachse von einer ersten Position, in der der Extrusionszylinder mit den Schneckenelementen in Extrusionsrichtung liegt, in eine zweite Position, in der die Übergabe auf das Transportmittel erfolgt, bewegbar ausgebildet sein. Das heißt, das Aufnahmemittel selbst wird insgesamt bewegt. Alternativ dazu kann auch ein entsprechender Teil des Aufnahmemittels zur Realisierung des Bewegungsmechanismus bewegbar sein.

Die Bewegung selbst kann unterschiedlicher Natur sein. Denkbar ist es, das Aufnahmemittel selbst oder einen Teil davon um eine parallel zur Zylinderachse liegende Achse schwenkbar auszulegen. Das heißt, der Zylinderwechsel erfolgt durch ein Seitwärtsschwenken der gesamten Verfahrenseinheit zum Transportmittel hin, das den Träger samt der Verfahrenseinheit während der Schwenkbewegung oder am Ende der Schwenkbewegung übernimmt. Hierzu weist das schwenkbare Aufnahmemittel oder der schwenkbare Teil eine über einen Motor antreibbare, die Schwenkachse bildende Welle auf, an der wenigstens zwei radiale und im Wesentlichen vertikal stehende Wangen vorgesehen sind, an denen der Träger halterbar ist. Es erfolgt also hier ein gesteuerter Schwenkbetrieb um lediglich eine Schwenkachse. Alternativ kann der Schwenkbetrieb auch über einen hydraulisch oder pneumatisch gesteuerten Zylinder gesteuert werden.

Alternativ hierzu ist es denkbar, dass das Aufnahmemittel selbst oder ein Teil davon über ein Parallelogramm-Gestänge mit zwei jeweils eine Schwenkachse bildenden Wellen, von denen wenigstens eine über einen Motor antreibbar ist und an welchem Gestänge wenigstens zwei Halterungen für den Träger vorgesehen sind, senkrecht zur Zylinderachse schwenkbar ist. Auch diese Ausgestaltung lässt ein Seitwärtsschwenken zur Träger- und damit zur Zylinderübergabe zu, jedoch unter Verwendung zweier Schwenkachsen und eines Parallelogramm-Gestänges, das - anders als bei der Einachs-Lösung - eine Seitwärtsbewegung bei gleichzeitig konstanter horizontaler Ausrichtung des Extrusionszylinders ermöglicht.

Alternativ zur Verschwenkung ist es auch denkbar, dass das Aufnahmemittel selbst oder ein Teil davon über ein Linearführungssystem horizontal verschiebbar ist, wobei in diesem Fall eine Hubeinrichtung zum vertikalen Bewegen des Aufnahmemittels oder des Teils im Bereich des Aufnahmemittels selbst vorgesehen ist, oder eine solche Hubeinrichtung am Transportmittel vorgesehen ist, die eine vertikale Bewegung des transportmittelseitig aufgenommenen Extrusionszylinders ermöglicht. Die Hubeinrichtung, die wie beschrieben entweder am Aufnahmemittel oder am Transportmittel vorgesehen sein kann, ist in diesem Fall für die Übergabe bzw. für das Übernehmen des Trägers samt Zylinder erforderlich, wobei je nach Anordnung der Hubeinrichtung entweder das Aufnahmemittel selbst zum Aufnehmen oder Übergeben angehoben oder abgesenkt werden kann, oder der entsprechende bewegliche Teil davon, bzw. bei einer Anordnung der Hubeinrichtung am Transportmittel der dortige Trägeraufnahmebereich angehoben oder abgesenkt werden kann, um den Träger vom Aufnahmemittel kommend zu übernehmen oder auf dieses zu übergeben.

Vorstehend wurden Ausführungsformen beschrieben, bei denen die eigentliche Bewegung des Trägers samt Zylinder zur Seite hin über einen am Aufnahmemittel realisierten Bewegungsmechanismus erfolgt. Alternativ - oder zusätzlich zu dem dort realisierten Bewegungsmechanismus - ist es möglich, am Transportmittel eine Bewegungseinrichtung für eine Bewegung des Extrusionszylinders relativ zum Aufnahmemittel vorzusehen. Kommt nur am Transportmittel eine Bewegungseinrichtung zum Einsatz, muss diese derart ausgelegt sein, dass eine vollständige Übergabe des Trägers samt Zylinder auf das unbewegliche Aufnahmemittel bzw. ein Übernehmen eines Trägers samt Zylinder vom Aufnahmemittel möglich ist. Sind an beiden Teilen entsprechende Bewegungsmechanismen vorgesehen, so wirken diese vorteilhaft zusammen.

Die transportmittelseitig vorgesehene Bewegungseinrichtung ist zweckmäßigerweise eine lineare Verschiebeeinrichtung, die bezüglich des Aufnahmemittels bewegt werden kann. Ist beispielsweise das Aufnahmemittel schwenkbar, so unterfährt die transportmittelseitige Verschiebeeinrichtung den Träger, wonach das Aufnahmemittel verschwenkt und den Träger auf der Verschiebeeinrichtung ablegt, wonach diese wieder auf das Transportmittel zurückgezogen wird. Handelt es sich bei dem Bewegungsmechanismus am Aufnahmemittel ebenfalls um ein lineares Verschiebesystem, so können beide Linearsysteme ineinander eingreifen, um den Träger zu wechseln, wozu zweckmäßigerweise wenigstens eines über eine Hubeinrichtung bewegbar ist, vornehmlich das des Transportmittels, um den Träger zu übernehmen oder zu übergeben. Über diese Hubeinrichtung kann auch eine Höhenanpassung erfolgen.

Wie beschrieben ist über die erfindungsgemäße Einrichtung in einem ersten Wechselschritt die Demontage des "alten" Extrusionszylinders und in einem zweiten Schritt die Montage des "neuen" Extrusionszylinders am Extruder möglich. Um diesen Wechsel möglichst schnell vornehmen zu können, ist es zweckmäßig, wenn das Transportmittel zwei Aufnahmen für jeweils einen Extrusionszylinder mit jeweils einer oder einer gemeinsamen Bewegungseinrichtung aufweist. Das heißt, das zum Extruder gefahrene Transportmittel führt in einer ersten Aufnahme den "neuen" Extrusionszylinder mit sich und nimmt in einem ersten Schritt den "alten" Extrusionszylinder in der zweiten Aufnahme auf, wonach unmittelbar der "neue" Extrusionszylinder aus der ersten Aufnahme entnommen und übergeben werden kann. Dabei können die beiden Aufnahme in Längsrichtung hintereinander angeordnet sein. In diesem Fall würde in die erste Aufnahme der demontierte "alte" Extrusionszylinder über seinen Träger eingebracht, wonach das Transportmittel manuell oder automatisch verschoben wird, bis es wieder richtig positioniert ist und der "neue" Extrusionszylinder aus der zweiten Aufnahme übergeben werden kann. Alternativ ist es denkbar, die beiden Aufnahmen übereinander anzuordnen und für eine Positionierung bezüglich des Aufnahmemittels vertikal bewegbar auszugestalten. Hier ist also ein paternosterartiger vertikaler Wechselbetrieb realisiert. Zunächst fährt die freie Aufnahme in die Übergabeposition und nimmt den "alten" Extrusionszylinder auf, wonach die gesamte Mimik beispielsweise nach unten verfährt und die zweite, obere Aufnahme mit dem "neuen" Extrusionszylinder in die Übergabeposition bewegt wird.

Alternativ zur Verwendung eines Transportmittels mit zwei Aufnahmen ist es natürlich auch denkbar, das Transportmittel in Form zweier separater Transporteinrichtungen mit jeweils einer Aufnahme mit gegebenenfalls zugeordneter Bewegungseinrichtung auszuführen, beide Transporteinrichtungen sind separat bezüglich des Extruders verfahrbar.

Ein Transportmittel kann beispielsweise bodenseitig verfahrbar sein, es ist also wagenartig ausgebildet und entweder rollen- oder schienengeführt. Alternativ ist es auch denkbar, das Transportmittel über eine erhöhte Führung hängend zu bewegen, vorzugsweise über eine deckenseitig angeordnete Führung oder eine entsprechend erhöht aufgebaute Stahlkonstruktion mit Führungsschienen. Die Bewegung kann manuell oder automatisch gesteuert erfolgen.

Sind die Schneckenschäfte über an der Antriebseinheit fest angeordnete Kupplungshülsen zu koppeln, ist das Aufnahmemittel zweckmäßigerweise selbst für eine Verschiebung des Extrusionszylinders relativ zum Extruder zum Koppeln oder Entkoppeln des Schneckenelements in Extrusionsrichtung bewegbar, oder es weist eine eine solche Verschiebung ermöglichende Verschiebeeinrichtung auf. Dies ermöglicht es, den Extrusionszylinder in Extrusionsrichtung zu verfahren, bis der oder die Schneckenschäfte aus den Kupplungshülsen und der Getriebelaterne herausgefahren sind. Sind die Kupplungshülsen hingegen beweglich, so können diese auf den Getriebewellen oder den Schneckenschäften verschoben werden, bis diese aus dem Eingriff sind, der Getriebeflansch wird in diesem Fall "offen" ausgeführt, so dass die Seitwärtsbewegung des Extrusionszylinders ohne vorherige Längsverschiebung bewerkstelligt werden kann.

Im Falle eines Verschiebemechanismus ist hierfür zweckmäßigerweise ein elektrisch oder pneumatisch oder hydraulisch gesteuerter Zylinder vorgesehen, der das entsprechend längs verschiebbar geführte Aufnahmemittel oder die Verschiebeeinrichtung bewegt. Die Bewegung wird beispielsweise durch Betätigung einer Verschiebetaste initiiert, die dauernd gedrückt werden muss, bis die Endlage, die eine Seitwärtsbewegung ermöglicht, eingenommen ist, was z.B. über einen Endschalter erkannt wird, der die weitere Ansteuerung des Zylinders stoppt.

Zur Vermeidung, dass der Träger samt Extrusionszylinder bereits eine Seitwärtsbewegung aus welchen Gründen auch immer vornimmt, bevor er aus seiner Antriebskopplung in eine freie Stellung bewegt wurde, ist es zweckmäßig, wenn am Aufnahmemittel eine Sperreinrichtung vorgesehen ist, die eine Seitwärtsbewegung des längsverschiebbaren Extrusionszylinders bis zum Erreichen einer definierten Endlage sperrt. Diese Sperreinrichtung kann z.B. in Form eines Zapfens oder Bolzens, der in einer entsprechenden Führung geführt ist, realisiert sein, wobei dieser Bolzen erst dann freigegeben wird, wenn die Endlage erreicht ist.

Zur Sicherung des Trägers samt Extrusionszylinders am Aufnahmemittel und/oder Transportmittel sind zweckmäßigerweise Einrichtungen zum Fixieren des Trägers vorgesehen, insbesondere in Form von Klemm- oder Rasthalterungen oder in Form von durch Formschluss halternden Eingriffhalterungen. Diese Fixiereinrichtungen dienen nicht nur zur Arretierung, sondern auch zur Bestimmung der korrekten Positionierung des Trägers am Aufnahmemittel oder am Transportmittel, nachdem die Einrichtungen nur dann geschlossen werden oder ineinander eingreifen können, wenn der Träger positionsrichtig liegt.

Um sicherzugehen, dass das Transportmittel auch richtig bezüglich des Aufnahmemittels positioniert ist, sollte wenigstens ein Sensor zur Erfassung der Positionierung des Transportmittels bezüglich des Aufnahmemittels vorgesehen sein, wobei der Übergabebetrieb des Extrusionszylinders in Abhängigkeit des Sensorsignals erfolgt. Dieser Sensor kann z.B. als Taster ausgebildet sein, der über das Transportmittel automatisch dann betätigt wird, wenn dieses richtig positioniert ist, denkbar ist auch eine Lichtschranke oder dergleichen. Gibt der Sensor das Erfassungssignal, kann der automatische Wechselbetrieb erfolgen, er wird also steuerungstechnisch freigegeben. Wird beispielsweise das Aufnahmemittel hierzu verschwenkt, so kann erst dann durch Betätigung eines Schalters oder dergleichen der Abschwenkmechanismus angesteuert werden, oder es werden bei Vorliegen des Sensorsignals die der Trägerfixierung dienenden Klemm- oder Rasthalterungen am Aufnahmemittel oder am Transportmittel über entsprechend angesteuerte Stellglieder automatisch geöffnet, so dass der Träger freigegeben wird etc.

Im Hinblick darauf, dass erfindungsgemäß die komplette Verfahrenseinheit ausgetauscht wird, die anschließend wieder anzuflanschen ist, ist es erforderlich, diese exakt bezüglich der Getriebekupplung zum Verbinden des oder der Schneckenschäfte auszurichten. Um dies zu ermöglichen ist erfindungsgemäß der Extrusionszylinder am Träger schwimmend gelagert, das heißt, die Zylindereinheit selbst ist bezüglich des am Aufnahmemittel fixierten Träger in x- und y-Richtung sowohl für die Ausrichtung zum Ankuppeln bewegbar, als auch um im Betrieb entstehende, temperaturbedingte Längendehnungen auffangen zu können. Die schwimmende Lagerung wird zweckmäßigerweise über zwei Platten realisiert, von denen eine erste Platte fest mit dem Träger und die zweite Platte mit dem Extrusionszylinder verbunden und bezüglich der ersten Platte beispielsweise über zwischengeschaltete Kugeln beweglich ist, wobei ein über eine Stelleinrichtung bewegbares Sperrglied vorgesehen ist, das zum bedarfsweisen Sperren der Beweglichkeit der am Extrusionszylinder befindlichen Platte mit dieser in Eingriff bringbar ist. Der Extrusionszylinder ist also bezüglich des am Aufnahmemittel arretierten Trägers beweglich, kann also manuell zur Ausrichtung etwas verschoben werden. Gleichzeitig ist eine Sperreinrichtung vorgesehen, die zum Sperren der Bewegbarkeit dient, was beim Wechseln erforderlich ist um zu vermeiden, dass der Extrusionszylinder beim Abschwenken bezüglich des Trägers verrutscht. Dabei kann das Sperrglied ein eine Durchbrechung in der dem Extrusionszylinder zugeordnete Platte durchsetzender Bolzen mit einem im Durchmesser im Wesentlichen dem der Durchbrechung angepassten Klemmabschnitt und einem demgegenüber im Durchmesser verringerten Freigabeabschnitt sein, welcher Bolzen in der Entsperrstellung mit dem Freigabeabschnitt in der Durchbrechung und in der Sperrstellung mit dem Klemmabschnitt in der Durchbrechung positionierbar ist, wobei dies zweckmäßigerweise über einen elektrisch oder pneumatisch gesteuerten Stellglied-Zylinder erfolgt.

Weitere Vorteile, Merkmale und Einzelheiten der Erfindung ergeben sich aus den im folgenden beschriebenen Ausführungsbeispielen sowie anhand der Zeichnungen. Dabei zeigen:
- Fig. 1: eine Prinzipdarstellung eines Extruders mit vollständig auswechsel- barem Extrusionszylinder,
- Fig. 2: eine Detaildarstellung des schwenkbaren Aufnahmemittels am Extruder aus Fig. 1 für den Träger samt Extrusionszylinder,
- Fig. 3: eine Darstellung des Extruders aus Fig. 1 mit dem zur Übergabe ver- fahrenen Trägers am Extrusionszylinder und dem übernehmenden Transportmittel in Form eines Transportwagens,
- Fig. 4: die Gerätschaften aus Fig. 3 mit vom Transportmittel unter den Trä- ger verfahrener Linear-Verschiebeeinrichtung,
- Fig. 5 - 8: Prinzipansichten zur Darstellung der Übergabe des Trägers samt Extrusionszylinders vom schwenkbaren Aufnahmemittel auf die Ver- schiebeeinrichtung des Transportmittels,
- Fig. 9 + 10: Darstellungen der Schwimmlagerung des Extrusionszylinders bezüg- lich des Trägers,
- Fig. 11: eine Prinzipdarstellung eines weiteren Bewegungsmechanismus un- ter Verwendung eines Parallelogramm-Gestänges,
- Fig. 12: eine weitere Ausführungsform eines Bewegungsmechanismus unter Verwendung zweier Linear-Führungssysteme am Aufnahmemittel und am Transportmittel, und
- Fig. 13: eine weitere Ausführungsform eines zwei vertikal übereinander an- geordnete Aufnahmen aufweisenden Transportmittels.

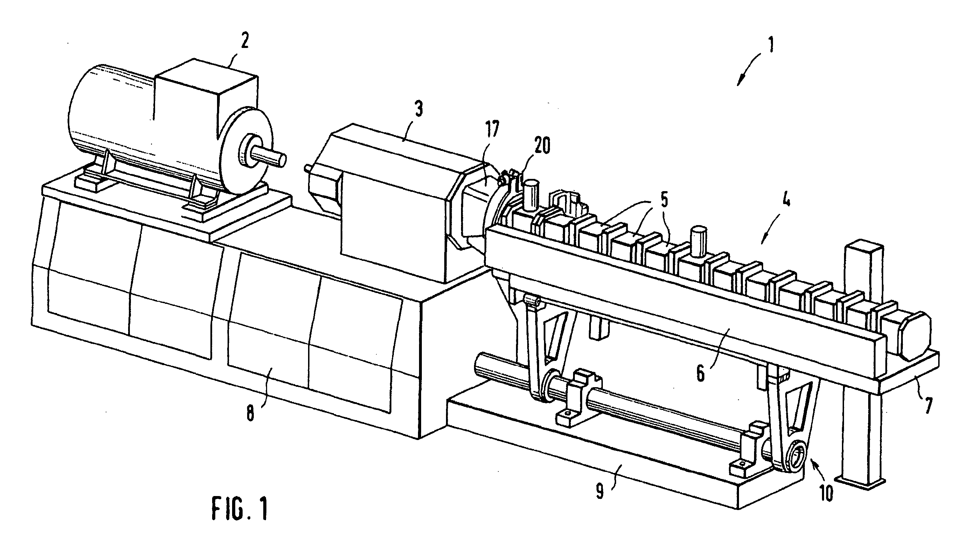

Fig. 1 zeigt einen Extruder 1 mit einem Motor 2 mit nachgeschaltetem Getriebe 3 und einem Extrusionszylinder 4 bestehend aus mehreren Zylinderabschnitten 5, in dessen Inneren im gezeigten Beispiel zwei Schneckenelemente in entsprechenden Bohrungen aufgenommen sind, die über das Getriebe 3, mit dem sie über eine nicht näher gezeigte, jedoch hinlänglich bekannte Kopplung gekoppelt sind, angetrieben werden. Der Extrusionszylinder 4 ist zusammen mit sämtlichen benötigten Kühlmittel-, Strom- und Steuerleitungen, die in einem entsprechenden Einbaukasten 6 verlegt sind, auf einem rahmen - oder gestellartigen Träger 7 aufgebaut, bei dem es sich um ein quasi standardisiertes Bauteil handelt, das heißt, jeder an dem Getriebe 3 anschließbare Extrusionszylinder ist auf einem solchen identisch ausgeführten Träger aufgebaut. Die im Leitungskasten 6 verlegten Leitungen sind so geführt bzw. ausgelegt bzw. gekoppelt, dass möglichst wenige Anschlüsse mit den in den Versorgungs- und Steuerschränken 8 befindlichen Kühlmittel- und Stromversorgungseinrichtungen sowie Steuerungseinrichtungen zu verbinden sind. Bevorzugt wird lediglich ein Kühlmittelanschluss, ein Stromversorgungsanschluss und ein Steuerleitungsanschluss vorgesehen, das heißt, der Extrusionszylinder 4 ist über lediglich drei Steckverbindungen mit den Betriebsmittelsystemen zu verbinden. Nicht näher gezeigt sind etwaige am Zylinder angeordnete Anbauteile wie z.B. Dosiereinrichtungen oder Seitenbeschickungen, die der Materialzufuhr dienen. Diese sind vor dem Zylinderwechsel abzubauen.

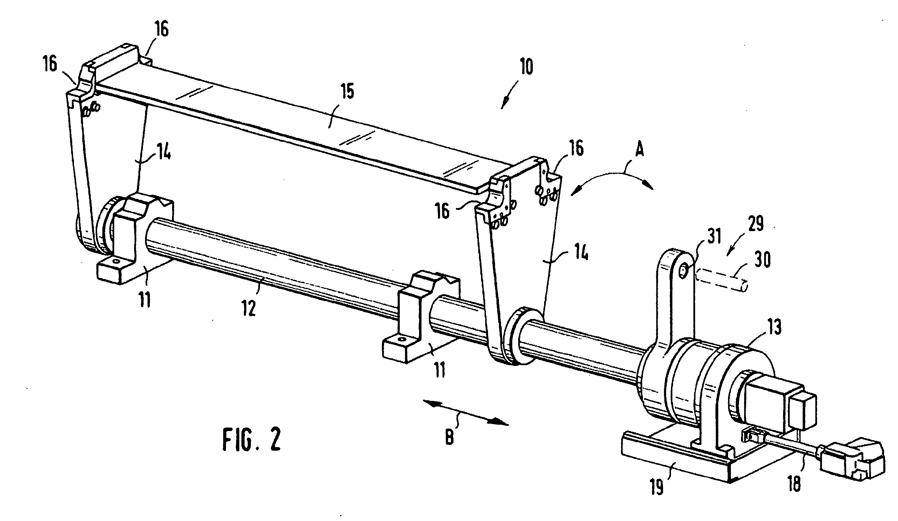

Der Träger 7 ist auf einem am Maschinenrahmen 9 des Extruders 1 angeordneten Aufnahmemittel 10 aufgenommen. Dieses Aufnahmemittel 10, das im Detail in Fig. 2 gezeigt ist, besteht aus einer in zwei Lagern 11 geführten Welle 12, die über einen Motor 13 gedreht werden kann. An der Welle 12 sind im gezeigten Beispiel zwei radial und vertikal davon abstehende Wangen 14 vorgesehen, die über einen Zwischenträger 15 aus Stabilisierungsgründen miteinander verbunden sind. Am oberen Ende der Wangen sind Formschluss-Eingriffe 16 vorgesehen, die mit entsprechenden Eingriffsabschnitten des Trägers 7, worauf nachfolgend noch eingegangen wird, zusammenwirken. Der Träger 7 wird also lösbar auf den Wangen 14 über die Eingriffe 16 aufgenommen. Die Wangen 14 und mit ihnen auch der aufgenommene Träger 7 samt Extrusionszylinder 4 kann infolge der Drehbarkeit der Welle 12 verschwenkt werden, wie durch den Doppelpfeil A dargestellt ist.

Zum Wechsel des Extrusionszylinders 4 müssen - neben den wenigen Versorgungs- und Steueranschlüssen - die beiden Schneckenelemente aus ihrer Antriebskopplung mit dem Getriebe 3 gelöst werden. Hierzu ist es gegebenenfalls erforderlich, den Extrusionszylinder 4 in Extrusionsrichtung zu verfahren, um die Schneckenschäfte aus den Kupplungen und der Getriebelaterne 17 herauszufahren. Zu diesem Zweck ist ein pneumatischer oder elektrischer Zylinder 18 vorgesehen, der am Maschinenrahmen einerseits und andererseits am Getriebe 13 befestigt ist. Das Getriebe 13 ist über seine Bodenplatte 19 längsbeweglich am Maschinengestell gehaltert, die Welle 12 ihrerseits ist in den Lagern 11 durchschiebbar aufgenommen. Dies ermöglicht es, durch Ansteuerung des Zylinders 18 das gesamte Aufnahmemittel 10 samt Extrusionszylinder 4 in Richtung des Doppelpfeils B vor- und zurückzubewegen und so die Antriebskopplung zu lösen.

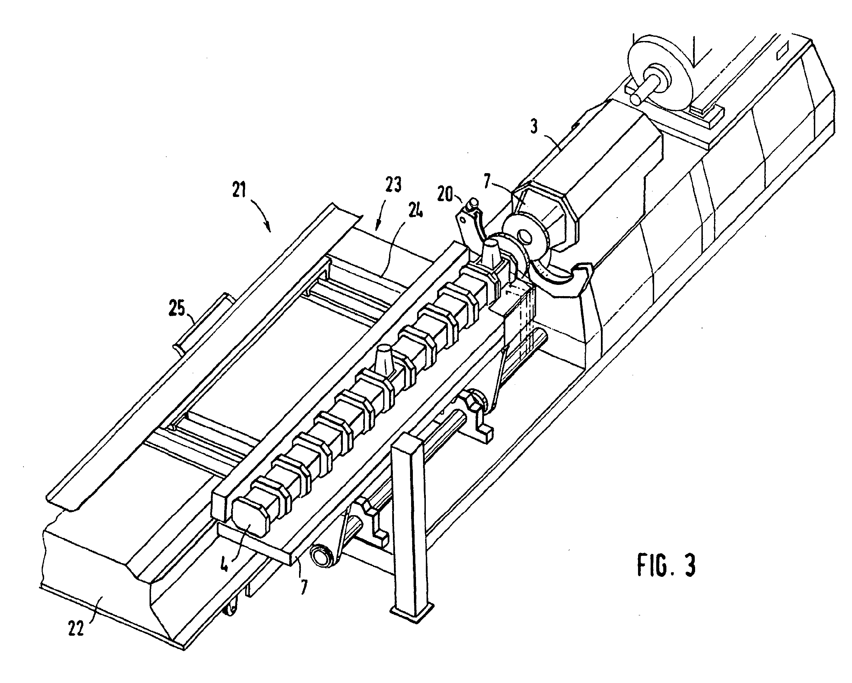

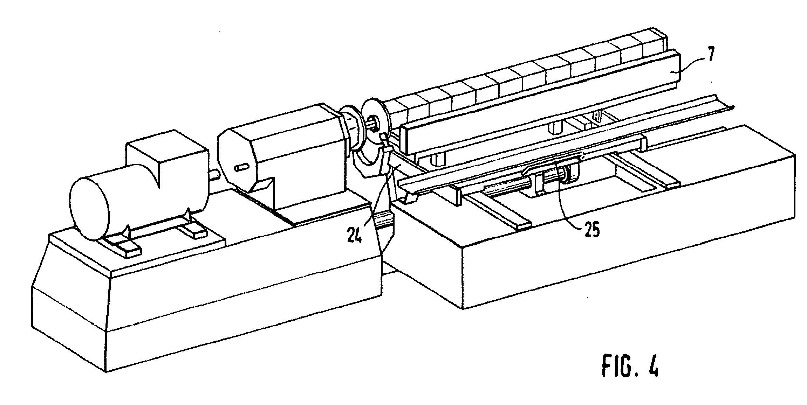

Diese Situation ist in Fig. 3 gezeigt. Gezeigt ist der geöffnete Klemmflansch 20, der in Fig. 1 noch geschlossen gezeigt ist. Dieser ist zum Verschieben des Extrusionszylinders in Extrusionsrichtung, also zum Entkoppeln zu öffnen. Ebenfalls zu öffnen sind die nicht näher gezeigten Klemmschrauben an den Kupplungshülsen der Schneckenschäfte, an die man durch Öffnen der Getriebelaterne 17 gelangt. Ist nun der Extrusionszylinder mechanisch wie auch hinsichtlich seiner Versorgung und Steuerung entkoppelt, kann er durch Ansteuerung des Zylinders 18 in die in Fig. 3 gezeigte Stellung verfahren werden. Benachbart zum Extruder 1 befindet sich ein Transportmittel 21 in Form eines bodenseitig rollengeführten, hier manuell verfahrbaren Wagens 22. Oberseitig am Transportmittel 22 ist eine Bewegungseinrichtung 23 in Form einer linearen Verschiebeeinrichtung 24 vorgesehen, die manuell über den Schiebegriff 25 bezüglich des Aufnahmemittels 10 und damit des Extrusionszylinders 4 verschoben werden kann. Die lineare Verschiebeeinrichtung 24 wird nun, siehe Fig. 4, unter den Träger 7 des Extrusionszylinders geschoben, der Träger 7 wird also unterfahren.

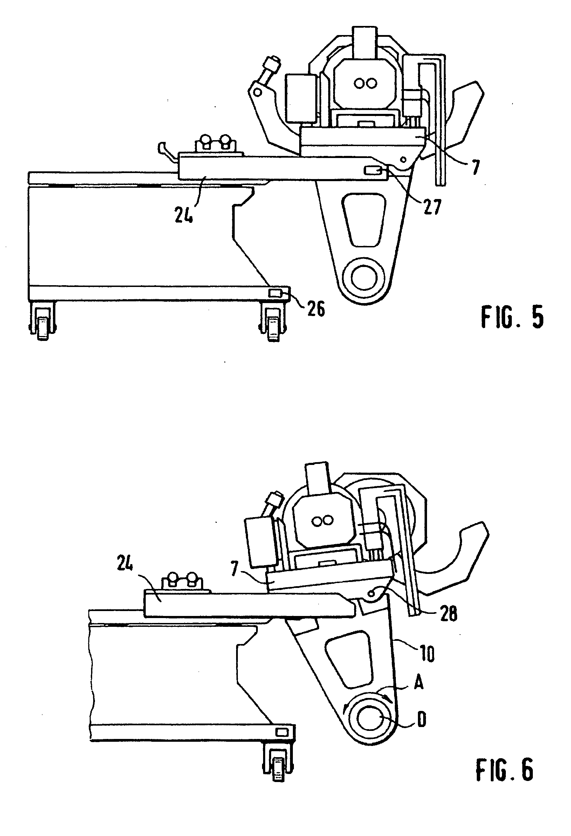

Diese Situation ist in Form einer Frontansicht in Fig. 5 gezeigt, wobei hier nur die wesentlichen Elemente, die zur Darstellung der Schnellwechseleinrichtung erforderlich sind, dargestellt sind. Ersichtlich untergreift die lineare Verschiebeeinrichtung 24 den Träger 7.

Nachdem über beispielsweise ein erstes Sensorelement 26, das hier am Transportmittel gezeigt ist, und das bei einer richtigen Positionierung des Transportmittels 1 bezüglich des Aufnahmemittels 10 durch ein entsprechendes Betätigungsteil, z.B. einen Zapfen oder dergleichen im Aufnahmemittel 10 oder am Maschinengestell betätigt wird, ein erstes Signal hinsichtlich der richtigen Positionierung gegeben wurde, und nachdem beispielsweise über ein zweites Sensorelement 27, das im gezeigten Beispiel am vorderen Ende der Verschiebeeinrichtung 24 angeordnet ist, und automatisch betätigt wird, wenn die Verschiebeeinrichtung 24 in der richtigen Übernahmeposition ist, auch hier die richtige Positionierung signalisiert wurde, kann der Übergabebetrieb erfolgen. Hierzu ist ein entsprechender Betätigungsschalter vom Maschinenführer zu bedienen. Hierüber wird der Motor 13 angesteuert, der nun die Welle 12, mithin also das Aufnahmemittel 10 verschwenkt.

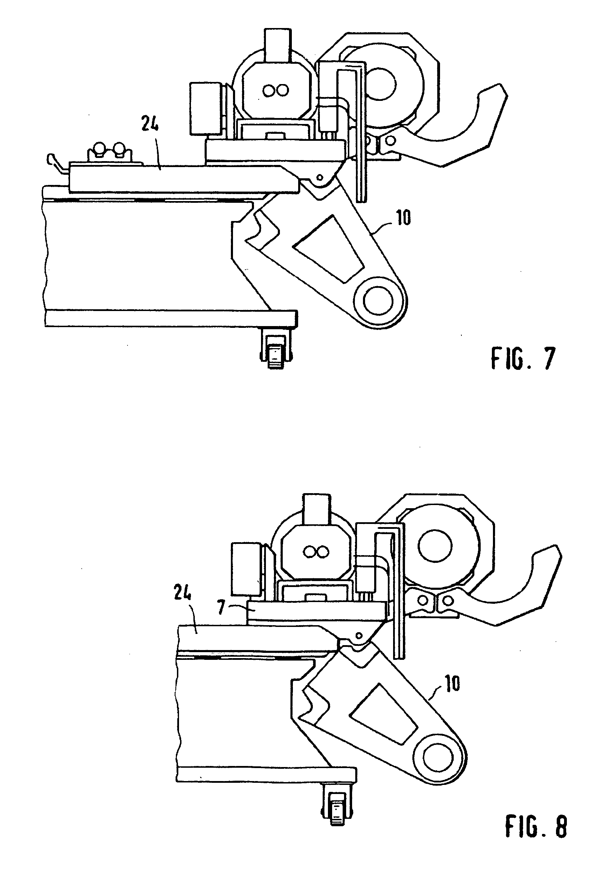

Den Bewegungsweg zeigen die Figuren 6 - 8. Ersichtlich schwenkt das Aufnahmemittel 10, wie durch den Doppelpfeil A gezeigt, um die Drehachse D, gebildet von der Welle 12. Mit zunehmender Verschwenkung nähert sich der Träger 7 der linearen Verschiebeeinrichtung 24, bis er auf dieser aufliegt. Diese Position ist in Fig. 7 gezeigt. Bei einer weiteren Verschwenkbewegung des Aufnahmemittels 10 wird die lineare Verschiebeeinrichtung 24 automatisch auf das Transportmittel 21 zurückgeschoben, bis der Träger 7 vollständig vom Aufnahmemittel 10 freigegeben ist, wonach die Verschiebeeinrichtung 24 manuell vollständig zurückgezogen wird. Der Träger 7 mitsamt dem Extrusionszylinder 4 und sämtlichen Versorgungsleitungen etc. ist damit vollständig vom Aufnahmemittel 10 auf das Transportmittel 21 übergeben worden.

Zum Anflanschen eines "neuen" Extrusionszylinders wird nun, nachdem das Transportmittel 21 mit dem "alten" Extrusionszylinder abtransportiert wurde, ein weiteres Transportmittel herangefahren, auf dessen linearer Verschiebeeinrichtung 24 ein anzubringender Extrusionszylinder, der auf einem identischen Träger aufgebaut ist, angeordnet ist. Die Übergabe erfolgt nun in umgekehrter Weise. Zunächst muss das Transportmittel wieder richtig positioniert werden, was über zumindest den transportmittelseitigen Sensor 26 erfasst werden kann. Anschließend wird die lineare Verschiebeeinrichtung soweit wie möglich vorgefahren, bis der erste Eingriff des Trägers 7 am Aufnahmemittel 10 erfolgt. Anschließend wird das Aufnahmemittel 10 durch Ansteuerung des Motors 13 wieder zurückgeschwenkt und dabei der Träger 7 samt Extrusionszylinder 4 mitgenommen. Die Verschwenkbewegung erfolgt so lange, bis die in Fig. 5 gezeigte Endstellung erreicht ist. Die lineare Verschiebeeinrichtung 24 kann nun wieder zurückgefahren werden, das Transportmittel 21 wird abtransportiert. Anschließend ist lediglich noch der Extrusionszylinder in die Ankoppelstellung durch Ansteuerung des Zylinders 18 und Zurückfahren entgegen der Extrusionsrichtung zu bewegen. Nunmehr ist noch die mechanische Antriebskopplung herzustellen sowie die entsprechenden Versorgungs- und Steuerleitungen anzuschließen, wonach sofort der Betrieb beginnen kann.

Wie den Figuren 5 - 8 zu entnehmen ist, sind am Träger unterseitig entsprechende Eingriffsvorsprünge 28 vorgesehen, die jeweils in die Eingriffe 16 an beiden Wangen 14 eingreifen. Die Form der Eingriffsvorsprünge 28 entspricht der Form der Eingriffe 16, so dass diese formschlüssig ineinander greifen können. Hierüber wird zum einen eine Fixierung des Trägers 7 samt Aufbau am Aufnahmemittel 10 realisiert, wie auch die Möglichkeit, während der Schwenkbewegung die lineare Verschiebeeinrichtung 24 automatisch zurückzuschieben.

In Fig. 2 ist ferner eine Sperreinrichtung 29 gezeigt, bestehend aus einem hier gestrichelt dargestellten, am Maschinengestell befindlichen Bolzen 30 und einer an einem Teil des Getriebes 13 vorgesehenen Durchbrechung 31, die der Bolzenaufnahme dient. Die Anordnung ist dabei derart, dass der Bolzen 30 so lange in der Bolzenaufnahme 31 geführt ist, bis das Aufnahmemittel 10 während der über den Zylinder 18 gesteuerten Verschiebebewegung entkoppelt die Endlage erreicht hat, die über einen geeigneten Endlagenschalter erfasst werden kann. Erst dann kann die Verschwenkbewegung erfolgen, zuvor ist diese aufgrund des Bolzeneingriffs gesperrt.

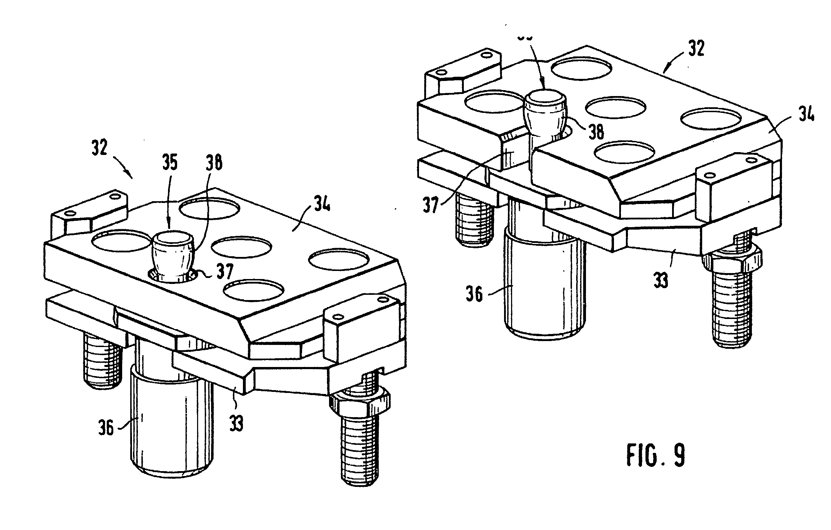

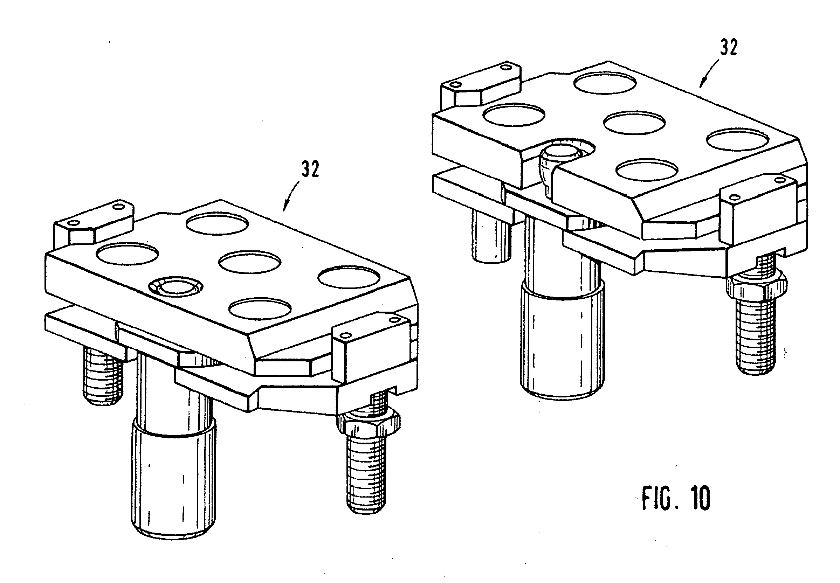

Die Figuren 9 und 10 zeigen die Schwimmlagerung 32, über die der Extrusionszylinder 4 bezüglich des Trägers 7 beweglich gelagert ist. Der Extrusionszylinder ist am vorderen und hinteren Ende über zwei Lagereinheiten gelagert. Jede Schwimmlagerung 32 umfasst eine erste Platte 33, die fest mit dem Träger 7 verbunden ist, sowie eine zweite Platte 34, die den Extrusionszylinder 4 trägt. Beide Platten 33, 34 sind über nicht näher gezeigte Kugeln schwimmend bezüglich einander bewegbar, das heißt, der Extrusionszylinder 4 kann bezüglich des Trägers 7 verschoben werden. Hierüber ist eine Ausrichtung des Extrusionszylinders bezüglich der Antriebseinheit zum Ankoppeln möglich, gleichermaßen kann auch eine Wärmedehnung während des Betriebs hierüber ausgeglichen werden.

Wie Fig. 9 zeigt, weist jede Schwimmlagerung 32 ferner einen Zapfen 35 auf, der jeweils über einen Stellzylinder 36 nach oben und unten bewegt werden kann. In der in Fig. 9 gezeigten Stellung ist der Zapfen 35 ausgefahren. Er durchgreift eine Durchbrechung 37, wobei der hier in der Durchbrechung befindliche Zapfenabschnitt einen geringeren Durchmesser als die Durchbrechung aufweist, das heißt, die Platte 34 ist trotz Zapfendurchgriffs beweglich. Soll der Zylinder übergeben werden, ist es erforderlich, diesen bezüglich des Trägers zu arretieren, wozu die Zapfen 35 über die Stellzylinder 36 nach unten gezogen werden. Das obere Ende des Zapfens 35 weist einen im Durchmesser im Wesentlichen dem Durchmesser der Durchbrechung 37 angepassten Klemmabschnitt 38 auf, der in die Durchbrechung 37 gezogen wird, so dass diese kein Spiel mehr hat. Die Durchbrechung 37 der in Extrusionsrichtung hinteren Lagereinheit ist geschlitzt, worüber die dort stärkeren thermisch bedingten Längendehnungen aufgefangen werden.

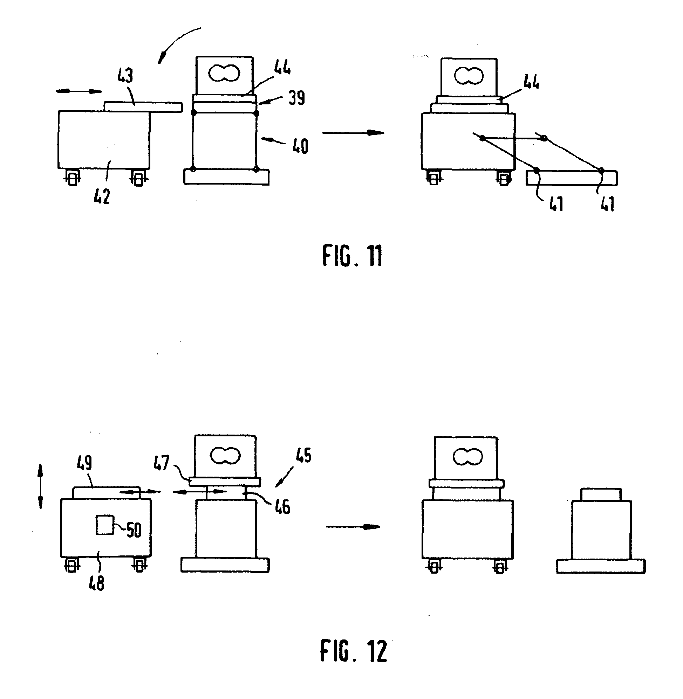

Fig. 11 zeigt in Form einer Prinzipskizze eine weitere Ausgestaltung eines erfindungsgemäßen Bewegungsmechanismus für das Aufnahmemittel. Hier ist das Aufnahmemittel 39, das hier nicht im Detail dargestellt ist, über ein Parallelogramm-Gestänge 40 um zwei separate Achsen 41, von denen zumindest eine motorisch antreibbar ist, schwenkbar, wobei der Extrusionszylinder wie Fig. 11 zeigt bei dieser Schwenkbewegung seine horizontale Ausrichtung beibehält. Das in Fig. 11 gezeigte Transportmittel 42 kann entsprechend dem Transportmittel 21 der vorbeschriebenen Ausführungsform ausgebildet sein und ebenfalls über eine lineare Verschiebeeinrichtung 43 verfügen, auf die der Träger 44 des Extrusionszylinders abgelegt wird. Hinsichtlich der Halterung des Trägers 44 am Aufnahmemittel 39, entsprechender Sensoren oder Sperrglieder oder die Längsverschiebbarkeit etc. gelten die vorstehenden Ausführungen entsprechend.

Fig. 12 zeigt eine weitere Ausführungsform eines Aufnahmemittels 45, das ein Linearführungssystem 46 aufweist, das ein horizontales Verschieben des Extrusionszylinders ermöglicht. Auch hier ist der Extrusionszylinder über einen Träger 47 am Linearführungssystem 46 gehaltert. Das Transportmittel 48 weist auch hier eine lineare Verschiebeeinrichtung 49 auf, diese ist jedoch über eine Hubeinrichtung 50 vertikal bewegbar. Zum Wechseln wird beispielsweise nach seiner Entkopplung und Längsverschiebung der Träger 47 samt Aufbau über das Linearführungssystem 46 in Richtung des Transportmittels 48 bewegt, wonach die den Träger 47 untergreifende Linearverschiebeeinrichtung 49 über die Hubeinrichtung 50 angehoben wird, den Träger 47 samt Aufbau aufnimmt und anschließend wieder zurückgezogen wird, wie in der rechts gezeigten Endstellung dargestellt ist. In entsprechender Weise erfolgt im umgekehrten Ablauf die Aufnahme eines neuen Extrusionszylinders.

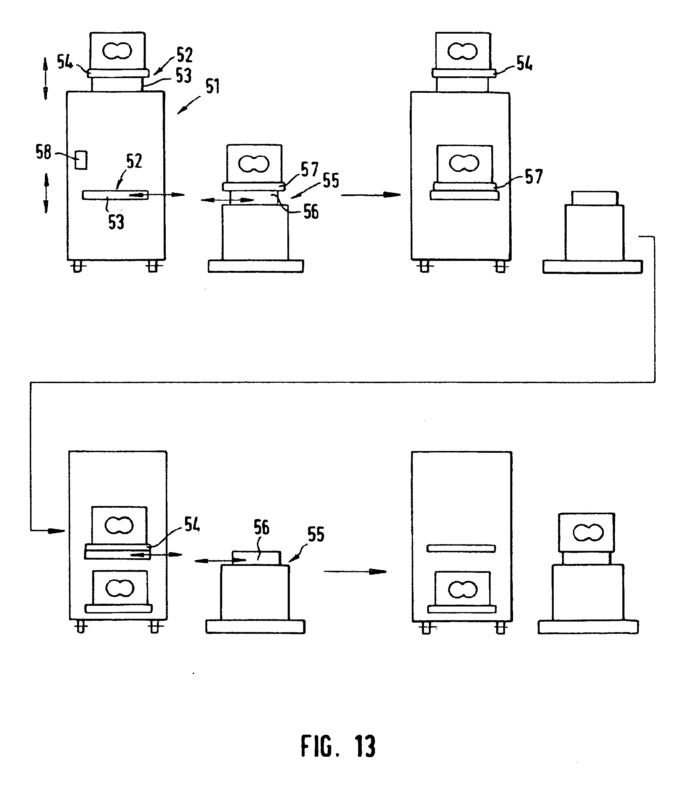

Fig. 13 zeigt schließlich eine weitere erfindungsgemäße Ausführungsform, wobei hier das Transportmittel 51 zwei Aufnahmen 52 jeweils gebildet durch eine lineare Verschiebeeinrichtung 53 für jeweils einen auf einem Träger aufgebauten Extrusionszylinder zeigt. Zum Wechseln wird zunächst die untere Aufnahme 52 bezüglich des Aufnahmemittels 55, auch hier in Form eines Linearführungssystems 56, positioniert. In einem ersten Schritt erfolgt nun beispielsweise in der bezüglich Fig. 12 beschriebenen Weise der Wechsel des Trägers 57 vom Linearführungssystem 56 auf die lineare Verschiebeeinrichtung 53. Dies ist im zweiten Teil in Fig. 13 gezeigt.

Anschließend werden über eine zentrale Hubeinrichtung 58 die beiden Aufnahmen 52 vertikal nach unten bewegt, bis die obere Aufnahme 52 bezüglich des Aufnahmemittels 55 ausgerichtet ist. Anschließend erfolgt der Wechsel des Trägers 54 auf das Linearführungssystem 56. An dieser Stelle ist darauf hinzuweisen, dass anstelle des Linearführungssystems 56 selbstverständlich auch die Schwenkausführung des Aufnahmemittels, wie sie in den Figuren 1 - 8 beschrieben ist, eingesetzt werden kann.

Während die Figuren jeweils ein bodenseitig geführtes Transportmittel zeigen, besteht selbstverständlich die Möglichkeit, dieses auch hängend zu führen. Ferner können anstelle der beiden in Fig. 13 gezeigten übereinander angeordneten Aufnahmen auch hintereinander liegende Aufnahmen vorgesehen sein.

## Patentansprüche

1. Einrichtung zum Wechseln eines Extrusionszylinders eines Extruders, welcher Extrusionszylinder aus mehreren Zylinderabschnitten und wenigstens einem im Zylinderinneren befindlichen Schneckenelement, das zum Extrudieren mit einem Antriebsaggregat des Extruders zu koppeln ist, besteht, **dadurch gekennzeichnet, dass** ein den Extrusionszylinder (4) tragender rahmen- oder gestellartiger Träger (7, 47) vorgesehen ist, über den der Extrusionszylinder (4) an einem am Extruder (1) vorgesehenen Aufnahmemittel (45, 55) sowie an einem verfahrbaren Transportmittel (48, 51) halterbar ist, wobei der Extrusionszylinder (4) mitsamt dem Träger (7, 47) vom Extruder zum Transportmittel (48, 51) und umgekehrt bewegt wird, wobei am Aufnahmemittel (45, 55) und/oder am Transportmittel (48, 51) ein Bewegungsmechanismus vor-gesehen ist, der eine für einen Wechsel des kompletten Extrusionszylinders (4) mitsamt dem Träger (7, 47) vom Aufnahmemittel (45, 55) zum Transportmittel (48, 51) und umgekehrt erforderliche Bewegung des Extrusionszylinders (4) mitsamt dem Träger (7, 47) in einer Richtung senkrecht zur Zylinderlängsachse ermöglicht, wobei das Aufnahmemittel (45, 55) selbst oder der Teil davon für eine Bewegung des Extrusionszylinders (4) mitsamt dem Träger (7, 47) über ein Linearführungssystem (46, 56) horizontal verschiebbar ist, und dass eine Hubeinrichtung zum vertikalen Bewegen des Aufnahmemittels (45, 55) oder des Teils oder eine am Transportmittel (48, 51) angeordnete Hubeinrichtung (50, 58 zum vertikalen Bewegen des transportmittelseitig aufgenommenen Extrusionszylinders (4) mitsamt dem Träger (7, 47) vörgesehen ist.

2. Einrichtung nach einem der vorangehenden Ansprüche, **dadurch gekennzeichnet, dass** am Transportmittel (21, 42, 48, 51) eine Bewegungseinrichtung für eine Bewegung des Extrusionszylinders relativ zum Aufnahmemittel (19, 39, 45, 55) vorgesehen ist.

3. Einrichtung nach Anspruch 2, **dadurch gekennzeichnet, dass** die Bewegungseinrichtung eine lineare Verschiebeeinrichtung (24, 49, 53) ist.

4. Einrichtung nach Anspruch 2 oder 3, **dadurch gekennzeichnet, dass** die Bewegungseinrichtung über eine Hubeinrichtung (50, 58) vertikal bewegbar ist.

5. Einrichtung nach einem der vorangehenden Ansprüche, **dadurch gekennzeichnet, dass** das Transportmittel (51) zwei Aufnahmen (52) für jeweils einen Extrusionszylinder mit jeweils einer oder einer gemeinsame Bewegungseinrichtung aufweist.

6. Einrichtung nach Anspruch 5, **dadurch gekennzeichnet, dass** die beiden Aufnahmen in Längsrichtung hintereinander angeordnet sind.

7. Einrichtung nach Anspruch 5, **dadurch gekennzeichnet, dass** die beiden Aufnahmen (52) übereinander angeordnet sind und für eine Positionierung bezüglich des Aufnahmemittels (55) vertikal bewegbar sind.

8. Einrichtung nach einem der Ansprüche 1 bis 4, **dadurch gekennzeichnet, dass** das Transportmittel zwei separate Transporteinrichtungen mit jeweils einer Aufnahme mit zugeordneter Bewegungseinrichtung umfasst.

9. Einrichtung nach einem der vorangehenden Ansprüche, **dadurch gekennzeichnet, dass** das Transportmittel (21, 42, 48, 51) bodenseitig verfahrbar ist, oder an einer vorzugsweise deckenseitig angeordneten Führung hängend bewegbar ist.

10. Einrichtung nach einem der vorangehenden Ansprüche, **dadurch gekennzeichnet, dass** Aufnahmemittel (10, 39, 45, 55) selbst für eine Verschiebung des Extrusionszylinders relativ zum Extruder zum Koppeln oder Entkoppeln des Schneckenelements in Extrusionsrichtung bewegbar ist, oder eine eine solche Verschiebung ermöglichende Verschiebeeinrichtung aufweist.

11. Einrichtung nach Anspruch 10, **dadurch gekennzeichnet, dass** zur Verschiebung ein elektrisch oder pneumatisch oder hydraulisch gesteuerter Zylinder (18) vorgesehen ist.

12. Einrichtung nach Anspruch 10 oder 11, **dadurch gekennzeichnet, dass** am Aufnahmemittel (10, 39, 45, 55) eine Sperreinrichtung (29) vorgesehen ist, die eine Seitwärtsbewegung des längs verschobenen Extrusionszylinders bis zum Erreichen einer definierten Endlage sperrt.

13. Einrichtung nach einem der vorangehenden Ansprüche, **dadurch gekennzeichnet, dass** am Aufnahmemittel (10, 39, 45, 55) und/oder am Transportmittel (21, 42, 48, 51) Einrichtungen (16) zum Fixieren eines Trägers (7, 44, 47, 54, 56), insbesondere in Form von Klemm- oder Rasthalterungen oder in Form von durch Formschluss halternden Eingriffhalterungen vorgesehen sind.

14. Einrichtung nach einem der vorangehenden Ansprüche, **dadurch gekennzeichnet, dass** wenigstens ein Sensor ((26, 27) zur Erfassung der Positionierung des Transportmittels (21, 42, 48, 51) bezüglich des Aufnahmemittels (10, 39, 45, 55) vorgesehen sind, wobei der Übergabebetrieb eines Extrusionszylinders in Abhängigkeit des Sensorsignals erfolgt.

15. Einrichtung nach einem der vorangehenden Ansprüche, **dadurch gekennzeichnet, dass** der Extrusionszylinder (4) am Träger (7, 44, 47, 54, 56) schwimmend gelagert ist.

16. Einrichtung nach Anspruch 15, **dadurch gekennzeichnet, dass** die schwimmende Lagerung über zwei Platten (33, 34) realisiert ist, von denen eine erste Platte (33) fest mit dem Träger (7, 44, 47, 54, 56) und die zweite Platte (34) mit dem Extrusionszylinder (4) verbunden und bezüglich der ersten Platte (33) beweglich ist, wobei ein über eine Stelleinrichtung bewegbares Sperrglied vorgesehen ist, das zum bedarfsweisen Sperren der Beweglichkeit der am Extrusionszylinder befindlichen Platte (34) mit dieser in Eingriff bringbar ist.

17. Einrichtung nach Anspruch 16, **dadurch gekennzeichnet, dass** das Sperrglied ein eine Durchbrechung (37) in der dem Extrusionszylinder zugeordneten Platte (34) durchsetzender Bolzen (35) mit einem im Durchmesser im Wesentlichen dem der Durchbrechung (37) angepassten Klemmabschnitt (38) und einem demgegenüber im Durchmesser verringerten Freigabeabschnitt ist, welcher Bolzen (35) der in einer Entsperrstellung mit dem Freigabeabschnitt in der Durchbrechung (37) und in der Sperrstellung mit dem Klemmabschnitt (38) in der Durchbrechung (37) positionierbar ist.

18. Einrichtung nach Anspruch 16 oder 17, **dadurch gekennzeichnet, dass** das Stellglied ein elektrisch oder pneumatisch gesteuerter Zylinder (36) ist.

## Claims

1. A device for exchanging an extrusion cylinder of an extruder, which extrusion cylinder comprises several cylinder portions and at least one screw element disposed in the cylinder interior, which are to be coupled to a drive unit of the extruder for the extrusion,
**characterised in that**
a frame-like or shelf-like carrier (7, 47) bearing the extrusion cylinder is provided, by means of which the extrusion cylinder (4) can be mounted on a retaining means (45, 55) provided on the extruder (1) and on a displaceable transport means (48, 51),
wherein the extrusion cylinder (4) together with the carrier (7, 47) is moved from the extruder to the transport means (48, 51) and vice versa,
wherein a movement mechanism, which allows a movement of the extrusion cylinder (4) together with the carrier (7, 47) in a direction perpendicular to the cylinder longitudinal axis required for an exchange of the complete extrusion cylinder (4) together with the carrier (7, 47) from the retaining means (45, 55) to the transport means (48, 51) and vice versa, is provided on the retaining means (45, 55) and/or on the transport means (48, 51), wherein the retaining means (45, 55) itself or the part thereof can be displaced horizontally for a movement of the extrusion cylinder (4) together with the carrier (7, 47) via a linear guide system (46, 56),
and that a lifting device for the vertical movement of the retaining means (45, 55) or of the part, or a lifting device (50, 58) arranged on the transport means (48, 51) for the vertical movement of the extrusion cylinder (4) together with the carrier (7, 47) retained on the transport means, is provided.

2. The device according to any one of the preceding claims,
**characterised in that**
a movement device for a movement of the extrusion cylinder relative to the retaining means (19, 39, 45, 55) is provided on the transport means (21, 42, 48, 51).

3. The device according to claim 2,
**characterised in that**
the movement device is a linear displacement device (24, 49, 53).

4. The device according to claim 2 or 3,
**characterised in that**
the movement device is moveable vertically via a lifting device (50, 58).

5. The device according to any one of the preceding claims,
**characterised in that**
the transport means (51) provides two recesses (52) in each case for one extrusion cylinder, in each case with one, or one common, movement device.

6. The device according to claim 5,
**characterised in that**
the two recesses are arranged one behind the other in the longitudinal direction.

7. The device according to claim 5,
**characterised in that**
the two recesses (52) are arranged one above the other and are moveable vertically for positioning relative to the retaining means (55).

8. The device according to any one of claims 1 to 4,
**characterised in that**
the transport means comprises two separate transport devices, in each case with one recess with associated movement device.

9. The device according to any one of the preceding claims,
**characterised in that**
the transport means (21, 42, 48, 51) is movable on the floor, or is displaceable in a suspended manner on a guide preferably arranged in the ceiling.

10. The device according to any one of the preceding claims,
**characterised in that**
retaining means (10, 39, 45, 55) itself can be moved in order to displace the extrusion cylinder relative to the extruder for the coupling or decoupling of the screw element in the extrusion direction, or provides a displacement device allowing such a displacement.

11. The device according to claim 10,
**characterised in that**,
for the displacement, an electrically or pneumatically or hydraulically controlled cylinder (18) is provided.

12. The device according to claim 10 or 11,
**characterised in that**
a locking device (29) is provided on the retaining means (10, 39, 45, 55), which blocks a lateral movement of the longitudinally displaced extrusion cylinder until a defined end position is reached.

13. The device according to any one of the preceding claims,
**characterised in that**
mechanisms (16) for fixing a carrier (7, 44, 47, 54, 56), especially in the form of clamp or latch mountings or in the form of contact mountings holding through a form fit, are provided on the retaining means (10, 39, 45, 55) and/or on the transport means (21, 42, 48, 51).

14. The device according to any one of the preceding claims,
**characterised in that**
at least one sensor (26, 27) for registering the positioning of the transport means (21, 42, 48, 51) relative to the retaining means (10, 39, 45, 55) are provided, wherein the transfer operation of an extrusion cylinder is implemented dependent upon the sensor signal.

15. The device according to any one of the preceding claims,
**characterised in that**
the extrusion cylinder (4) is mounted on the carrier (7, 44, 47, 54, 56) in a floating manner.

16. The device according to claim 15,
**characterised in that**
the floating mounting is realised via two plates (33, 34), of which a first plate (33) is rigidly connected to the carrier (7, 44, 47, 54, 56), and the second plate (34) is connected to the extrusion cylinder (4) and is moveable relative to the first plate (34), wherein a locking element moveable via an adjustment device is provided, which, in order to lock the mobility of the plate (34) disposed on the extrusion cylinder when required, can be brought into contact with the latter.

17. The device according to claim 16,
**characterised in that**
the locking element is a pin (35) passing through a perforation (37) in the plate (34) associated with the extrusion cylinder with a clamping portion (38), adapted in diameter substantially to that of the perforation (37), and a release portion, reduced in diameter relative to the latter, which pin (35) which can be positioned in an unlocked position with the release portion in the perforation (37) and in the locked position with the clamping portion (38) in the perforation (37).

18. The device according to claim 16 or 17,
**characterised in that**
the adjustment element is an electrically or pneumatically controlled cylinder (36).

## Revendications

1. Dispositif permettant le remplacement d'un cylindre d'extrusion d'une extrudeuse, lequel cylindre d'extrusion est constitué par plusieurs parties et par au moins une vis sans fin, qui est située à l'intérieur du cylindre et qui, pour le processus d'extrusion, est destinée à être couplée à un organe d'entraînement de l'extrudeuse, **caractérisé en ce qu'**il est prévu un support (7, 47) en forme de cadre ou de bâti, qui porte le cylindre d'extrusion (4) et par lequel le cylindre d'extrusion (4) peut être maintenu sur un moyen de réception (45, 55) prévu sur l'extrudeuse (1), ainsi que sur un moyen de transport (48, 51) mobile, ledit cylindre d'extrusion (4), y compris le support (7, 47), étant déplacé depuis l'extrudeuse vers le moyen de transport (48, 51) et inversement, un mécanisme cinétique étant prévu sur le moyen de réception (45, 55) et/ou sur le moyen de transport (48, 51), lequel permet le mouvement du cylindre d'extrusion (4), y compris du support (7, 47), nécessaire pour un remplacement du cylindre d'extrusion (4) complet, y compris du support (7, 47), dans une direction perpendiculaire à l'axe longitudinal du cylindre, le moyen de réception (45, 55) lui-même ou une partie de celui-ci pouvant être déplacé horizontalement, au moyen d'un système de guidage linéaire (46, 56), pour un mouvement du cylindre d'extrusion (4), y compris du support (7, 47), et **en ce qu'**il est prévu un dispositif de levage pour le mouvement vertical du moyen de réception (45, 55) ou de la partie de celui-ci ou un dispositif de levage (50, 58), monté sur le moyen de transport (48, 51), pour le mouvement vertical du cylindre d'extrusion (4), y compris du support (7, 47), reçu du côté du moyen de transport.

2. Dispositif selon l'une des revendications précédentes, **caractérisé en ce que** sur le moyen de transport (21, 42, 48, 51) est prévu un dispositif cinétique pour un mouvement du cylindre d'extrusion par rapport au moyen de réception (19, 39, 45, 55).

3. Dispositif selon la revendication 2, **caractérisé en ce que** le dispositif cinétique est un dispositif à mouvement de translation (24, 49, 53) linéaire.

4. Dispositif selon la revendication 2 ou 3, **caractérisé en ce que** le dispositif cinétique est apte à être déplacé verticalement au moyen d'un dispositif de levage (50, 58).

5. Dispositif selon l'une quelconque des revendications précédentes, **caractérisé en ce que** le moyen de transport (51) comporte deux logements (52) chacun pour un cylindre d'extrusion, avec respectivement un dispositif cinétique ou un dispositif cinétique commun.

6. Dispositif selon la revendication 5, **caractérisé en ce que** les deux logements sont disposés l'un derrière l'autre dans le sens longitudinal.

7. Dispositif selon la revendication 5, **caractérisé en ce que** les deux logements (52) sont disposés l'un au-dessus de l'autre et sont propres à être déplacés verticalement en vue de se positionner par rapport au moyen de réception (55).

8. Dispositif selon l'une quelconque des revendications 1 à 4, **caractérisé en ce que** le moyen de transport comporte deux dispositifs de transport séparés munis chacun d'un logement avec un dispositif cinétique associé.

9. Dispositif selon l'une quelconque des revendications précédentes, **caractérisé en ce que** le moyen de transport (21, 42, 48, 51) est mobile sur le plancher ou est mobile en suspension sur un guidage disposé de préférence du côté du plafond.

10. Dispositif selon l'une quelconque des revendications précédentes, **caractérisé en ce que** le moyen de réception (10, 39, 45, 55) est mobile lui-même dans la direction d'extrusion pour un mouvement de translation du cylindre d'extrusion par rapport à l'extrudeuse en vue du couplage ou découplage de la vis sans fin, ou comporte un dispositif à mouvement de translation permettant un tel mouvement de translation.

11. Dispositif selon la revendication 10, **caractérisé en ce que**, pour le mouvement de translation, il est prévu un cylindre (18) commandé par voie électrique ou pneumatique ou hydraulique.

12. Dispositif selon la revendication 10 ou 11, **caractérisé en ce que** sur le moyen de réception (10, 39, 45, 55) est prévu un dispositif de verrouillage (29) qui empêche un mouvement vers le côté du cylindre d'extrusion déplacé longitudinalement jusqu'à ce qu'il atteigne une position finale définie.

13. Dispositif selon l'une quelconque des revendications précédentes, **caractérisé en ce que** sur le moyen de réception (10, 39, 45, 55) et/ou sur le moyen de transport (21, 42, 48, 51) sont prévus des dispositifs (16) pour fixer un support (7, 44, 47, 54, 56), en particulier sous la forme de supports de serrage ou de blocage ou sous la forme de supports à emboîtement assurant le support par un assemblage par conjugaison de forme.

14. Dispositif selon l'une quelconque des revendications précédentes, **caractérisé en ce qu'**il est prévu au moins un capteur (26, 27) destiné à détecter le positionnement du moyen de transport (21, 42, 48, 51) par rapport au moyen de réception (10, 39, 45, 55), le processus de transfert d'un cylindre d'extrusion étant effectué en fonction du signal du capteur.

15. Dispositif selon l'une quelconque des revendications précédentes, **caractérisé en ce que** le cylindre d'extrusion (4) est monté flottant sur le support (7, 44, 47, 54, 56).

16. Dispositif selon la revendication 15, **caractérisé en ce que** le montage flottant est réalisé au moyen de deux plateaux (33, 34), parmi lesquels un premier plateau (33) est assemblé de manière fixe au support (7, 44, 47, 54, 56) et le deuxième plateau (34) est assemblé au cylindre d'extrusion (4) et est mobile par rapport au premier plateau (33), il est prévu un organe de verrouillage, qui peut être déplacé au moyen d'un dispositif de réglage et qui peut être amené en prise avec le plateau (34) pour empêcher, si nécessaire, la mobilité dudit plateau fixé au cylindre d'extrusion.

17. Dispositif selon la revendication 16, **caractérisé en ce que** l'organe de verrouillage est un boulon (35) passant à travers un passage (37) dans le plateau (34) associé au cylindre d'extrusion, lequel boulon comporte un tronçon de blocage (38), dont le diamètre est ajusté sensiblement à celui du passage (37), et un tronçon de déblocage dont le diamètre est inférieur à celui dudit tronçon de blocage, lequel boulon (35) peut être positionné dans une position de déverrouillage avec le tronçon de déblocage dans le passage (37) et dans la position de verrouillage avec le tronçon de blocage (38) dans le passage (37).

18. Dispositif selon la revendication 16 ou 17, **caractérisé en ce que** l'organe de commande est un cylindre (36) commandé par voie électrique ou pneumatique.
